# EUROPEAN PATENT APPLICATION

(11) **EP 4 790 481 A1**
(43) Date of publication of application: **12.08.2026**
(21) Application number: 24891752.8
(22) Date of filing: 12.11.2024
(51) Int. Cl.: G02F 1/1339, G02F 1/1343, G02F 1/139, G02F 1/137, C09K 19/60, G02F 1/161

(54) **SUBSTRATE**

(30) Priority: 13.11.2023 KR 20230156491; 13.11.2023 KR 20230156565
(71) Applicant: LG Chem, Ltd., Seoul 07336 (KR)
(72) Inventor: SEO, Han Min, Daejeon 34122 (KR); HONG, Kyung Ki, Daejeon 34122 (KR); LEE, Beom Jin, Daejeon 34122 (KR); LEE, Seung Heon, Daejeon 34122 (KR); KIM, Dong Hyun, Daejeon 34122 (KR); YOU, Jung Sun, Daejeon 34122 (KR); WOO, Jae Yong, Daejeon 34122 (KR); PARK, Young Jin, Daejeon 34122 (KR); NAM, Pil Soo, Daejeon 34122 (KR); KO, Jae Ho, Daejeon 34122 (KR)
(74) Representative: Plasseraud IP
(86) International application number: PCT/KR2024/017850
(87) International publication number: WO 2025/105806

(57) **Abstract**

The present specification discloses a substrate and a use thereof. For example, even when the substrate is applied to a device for implementing transmittance variation by means of a liquid crystal host and a dichroic dye guest, it is possible to ensure low transmittance relative to a thickness in a blocking mode, and it is also possible to prevent the occurrence of haze in the blocking mode. Even when a spacer is implemented to be colored, the substrate can prevent an optical defect recognized by the color of the spacer in a transparent mode and the like. For example, the substrate can be used in a device having a transmittance-variable layer comprising a dye.

## Description

### Technical Field

This application claims the benefit of priority to Korean Patent Application Nos. 10-2023-0156491 and 10-2023-0156565, dated November 13, 2023, the disclosures of which are incorporated herein by reference in their entirety.

The present specification discloses a substrate and a use thereof.

### Background Art

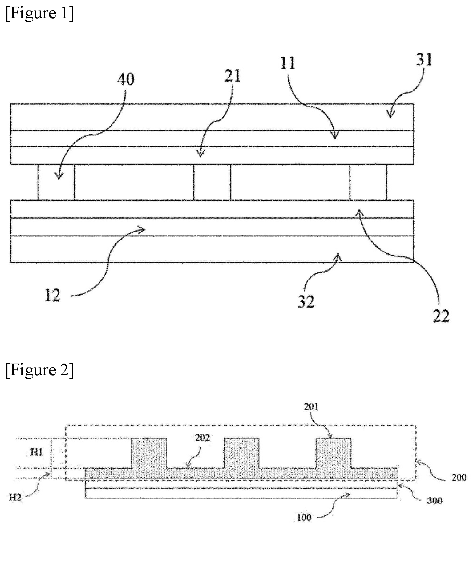

A transmittance-variable device using liquid crystal typically has a form that an interval between base material layers (31, 32) in which electrode layers (11, 12) and alignment films (21, 22) are sequentially formed is maintained through a spacer (40), and the liquid crystal is positioned within the interval, as shown in Figure 1. In such a device, transmittance is adjusted by adjusting orientation of the liquid crystal through the alignment films (21, 22) and the electrode layers (11, 12).

As a method for achieving variation of transmittance in the transmittance-variable device, there is a method of applying two devices with the structure shown in Figure 1, or applying a device with the structure shown in Figure 1 and a polarizing layer, or the like.

As another method, for example, as disclosed in Patent Document 1, there is a method of positioning a liquid crystal host and a dichroic dye guest (anisotropic-dye guest) on the interval maintained by the spacer (40) in the structure shown in Figure 1. In this method, upon vertical orientation of the liquid crystal host, the dichroic dye guest is also vertically aligned, whereby a transparent mode is implemented, and upon horizontal orientation of the liquid crystal host, the dichroic dye guest is also horizontally aligned, resulting in an increase of a light quantity absorbed by the dichroic dye guest, whereby a blocking mode is implemented.

However, in the method of using a dichroic dye guest as such, there are limitations in implementing low transmittance in the blocking mode because light absorption in the blocking mode is performed by the dichroic dye guest. In addition, a refractive index difference between the liquid crystal host and the dichroic dye guest causes significant haze in the blocking mode.

For example, if the interval (so-called cell gap) defined by the spacer increases, a path through which the dichroic dye guest can absorb light is lengthened, so that there is an effect capable of lowing transmittance, but the device can become excessively thick, and the path through which light is scattered can also be lengthened, thereby leading to an increase in haze.

When the dichroic dye guest is used, a dye is also often added to the spacer to be colored, considering the color of the dye guest. However, as exemplified in Figure 1, in the conventional structure, since portions without any spacer and portions with the spacer are distinguished, for example, optical stains caused by the spacer can be recognized in transparent mode, which can become more pronounced as the spacer size increases or the spacer formation area increases.

### <Prior Art Documents>

### <Patent Documents>

(Patent Document 1) Korean Registered Patent No. 10-2442852

### Disclosure

### Technical Problem

The present specification discloses a substrate and a use thereof. The present specification is intended to disclose a substrate capable of securing low transmittance relative to a thickness in a blocking mode and preventing occurrence of haze in the blocking mode, even when applied to a device implementing transmittance variation by applying a coloring component, such as a dichroic dye guest, and a use thereof. The present specification is intended to disclose a substrate capable of preventing optical defects recognized by the color of a spacer in a transparent mode, and the like, even when the spacer is implemented to be colored, and a use thereof.

### Technical Solution

Among the physical properties mentioned herein, a physical property in which the temperature affects the physical property is a physical property measured at room temperature, unless otherwise specified.

The term room temperature is a natural temperature without artificially worming or cooling, which means, for example, any temperature within a range of about 10°C to 30°C, for example, a temperature of about 23°C or about 25°C or so.

In this specification, unless otherwise specified, the unit of temperature is °C.

Among the physical properties mentioned herein, when a pressure affects the results, the relevant physical property is a physical property measured at normal pressure, unless otherwise specified.

The term normal pressure is a natural pressure without artificially pressurizing or depressurizing, and typically a pressure within a range of about 700 mmHg to 800 mmHg or so is referred to as the normal pressure.

Among the physical properties mentioned herein, when a humidity affects the results, the relevant physical property is a physical property measured at a humidity without any artificial control in the room temperature and normal pressure state, unless otherwise specified.

The present specification discloses a substrate.

The substrate may comprise a base material layer and a spacer layer formed on the base material layer.

The base material layer may be any base material layer used as a substrate in a known optical device, such as an LCD (Liquid Crystal Display), without any special limitation. The base material layer may be in the form of a film or sheet. For example, the base material layer may be an inorganic base material layer or an organic base material layer. The inorganic base material layer may be exemplified by a glass base material layer, and the like, and the organic base material layer may be exemplified by various plastic films or sheets, and the like. The plastic film may be exemplified by a triacetyl cellulose (TAC) films; a COP (cyclo olefin copolymer) film such as a norbornene derivative; an acryl film such as PMMA (poly(methyl methacrylate)); a PC (polycarbonate) film; a polyolefin film such as PE (polyethylene) or PP (polypropylene); a PVA (polyvinyl alcohol) film; a DAC (diacetyl cellulose) film; a Pac (polyacrylate) film; a PES (poly ether sulfone) film; a PEEK (polyetheretherketon) film; a PPS (polyphenylsulfone) film, a PEI (polyetherimide) film; a PEN (polyethylenenaphthalate) film; a PET (polyethyleneterephtalate) film; a PI (polyimide) film; a PSF (polysulfone) film, or a PAR (polyarylate) film, and the like, but is not limited thereto.

The thickness of the base material layer is not particularly limited, and an appropriate range may be selected depending on the application.

The substrate comprises a spacer layer on the base material layer. When the substrate has been applied to an optical device together with another substrate, the spacer layer is a layer serving to maintain an interval between the substrates. The spacer layer may comprise a lower layer and a spacer structure formed on the lower layer. The spacer structure is a structural object having a higher height than the lower layer, which is a structural object serving to maintain an interval between the substrates in the optical device, and the lower layer is a layer having a thin thickness compared to the height of the spacer structure.

The lower layer and the spacer structure may be formed integrally with each other, and may be formed of the same material.

The spacer layer may be formed to occupy the area of the base material layer in a certain ratio or more. For example, the lower limit of the ratio of the area of the spacer layer or the lower layer formed on the base material layer to the area of the base material layer may be 70%, 75%, 80%, 85%, 95%, or 100% or so, and the upper limit thereof may be 100%, 99%, 98%, 97%, 96%, or 95% or so. The ratio may be within a range of more than or equal to, or more than any lower limit arbitrarily selected from the above-listed lower limits; or within a range of less than, or equal to or less than any upper limit arbitrarily selected from the above-listed upper limits while being more than or equal to, or more than any lower limit arbitrarily selected from the above-listed lower limits. When the area of the surface of the base material layer on which the spacer layer is formed is A, and the area of the spacer layer or the lower layer is B, the ratio is calculated as 100 x B/A.

In the substrate, the spacer layer comprises a spacer structure maintaining an interval between the substrates through a step, and a lower layer, while being formed to occupy the area of the base material layer in a certain portion or more.

In such a structure, the lower layer assists in the absorption of light in the blocking mode, thereby enabling lower transmittance to be implemented in a transmittance-variable device. Also, by adjusting the respective heights of the lower layer and the spacer structure and their ratio, and the optical properties (e.g., transmittance and haze, etc.) of the spacer layer to minimize transmittance reduction in the transparent mode, a device capable of variable transmittance can be formed by minimizing the decrease in transmittance in the transparent mode. The lower layer can also prevent haze capable of occurring in the transmittance-variable device by a method of absorbing scattered light, and the like. In addition, as the spacer layer occupies the area of the base material layer in a certain ratio or more, it is possible to prevent recognition of optical defects due to the color of the spacer, and such an effect can be secured even when the size of the spacer structure increases or a formation density of the spacer structure increases.

Figure 2 is an exemplary cross-sectional diagram of a substrate of this type. As in Figure 2, a spacer layer (200) is formed on a base material layer (100), and has a step, thereby separating the spacer structure (201) and the lower layer (202).

Such a spacer structure (201) may be formed integrally with the lower layer (202). The spacer structure (201) and the lower layer (202) may be formed of the same material.

The lower limit of the ratio (H1/H2) of the height (H1 in Figure 2) of the spacer structure to the thickness (H2 in Figure 2) of the lower layer in the spacer layer may be 1, 2, 3, 4, 5, 6, 7, 8, 9, 10, 11, 12, 13, 14, or 15 or so, and the upper limit thereof may be 30, 27, 26, 25, 24, 23, 22, 21, 20, 19, 18, 17, 16, or 15 or so. The ratio may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits. Under such a ratio, a device capable of varying transmittance while ensuring the desired low transmittance and low haze in a blocking mode can be implemented, and even when the spacer layer is formed to have a color, it is possible to prevent recognition of defects due to color differences.

When the thickness of the lower layer of the spacer layer is mentioned in this specification, the thickness of the lower layer may be the minimum thickness, the maximum thickness, or the average thickness among the thicknesses of the lower layers, in the case where the thickness of the lower layer of the spacer layer is not constant, unless otherwise specified.

When the height of the spacer structure is mentioned in this specification, the height of the spacer structure may be the minimum height, the maximum height, or the average height among the heights of the spacer structure, in the case where the height of the spacer structure is not constant, unless otherwise specified.

If the ratio is satisfied, the ranges of the height of the spacer structure and the thickness of the lower layer are not limited, which may be appropriately adjusted in consideration of the desired structure (e.g., cell gap). For example, the lower limit of the thickness (H2) of the lower layer may be 0.1 µm, 0.2 µm, 0.3 µm, 0.4 µm, 0.5 µm, 0.6 µm, 0.7 µm, 0.8 µm, 0.9 µm, or 1.0 µm or so, and the upper limit thereof may be 5 µm, 4.5 µm, 4 µm, 3.5 µm, 3.0 µm, 2.5 µm, 2.0 µm, 1.5 µm, or 1.0 µm or so. The thickness of the lower layer may be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits. The thickness of such a lower layer implements a device capable of transmittance variation while ensuring low transmittance and low haze in the blocking mode, and is advantageous in preventing recognition of defects due to color differences even when the spacer layer is formed to have color.

The lower limit of the height (H1) of the spacer structure may be 1 µm, 2 µm, 3 µm, 4 µm, 5 µm, 6 µm, 7 µm, 8 µm, 9 µm, 10 µm, 11 µm, 12 µm, 13 µm, 14 µm, or 15 µm or so, and the upper limit thereof may be 50 µm, 48 µm, 46 µm, 44 µm, 43 µm, 42 µm, 41 µm, 40 µm, 38 µm, 36 µm, 34 µm, 33 µm, 32 µm, 31 µm, 30 µm, 28 µm, 26 µm, 24 µm, 23 µm, 22 µm, 21 µm, 20 µm, 19 µm, 18 µm, 17 µm, 16 µm, or 15 µm or so. The height of the spacer structure may be within a range of more than or equal to, or more than any lower limit selected from the above-listed lower limits; or within a range of less than, or equal to or less than any upper limit arbitrarily selected from the above-listed upper limits while being more than or equal to, or more than any lower limit arbitrarily selected from the above-listed lower limits.

Through such a design, it is possible to secure transmittance-variable characteristics while achieving lower transmittance and lower haze in the blocking mode.

As described below, it is also possible to more excellently secure the characteristics through adjustment of the haze and/or optical density of the spacer layer material.

For example, height deviations may also occur during a process of designing the spacer structure. When a substrate with such deviations is applied to an optical device, it allows to have unwanted and undesirable staining or contrast, whereby optical defects, such as diffraction or transmittance deviations, can be caused. Therefore, to secure light-shielding characteristics and transmittance-variable characteristics while preventing such optical defects, it is advantageous for the deviations of the height (H1) of the spacer structure and/or the thickness (H2) of the lower layer to be smaller.

For example, the lower limit of the standard deviation of the height (H1) of the spacer structure is not particularly limited, but may be 0 µm, 0.01 µm, 0.02 µm, 0.03 µm, 0.04 µm, 0.05 µm, 0.06 µm, 0.07 µm, 0.08 µm, 0.09 µm, or 0.1 µm or so, and the upper limit thereof may be 0.5 µm, 0.4 µm, 0.3 µm, 0.2 µm, 0.1 µm, 0.09 µm, or 0.08 µm or so. The standard deviation of the height of the spacer structure may be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

For example, the lower limit of the standard deviation of the thickness (H2) of the lower layer of the spacer layer is not particularly limited, but may be 0 µm, 0.01 µm, 0.02 µm, 0.03 µm, 0.04 µm, 0.05 µm, 0.06 µm, 0.07 µm, 0.08 µm, 0.09 µm, or 0.1 µm or so, and the upper limit thereof may be 0.5 µm, 0.4 µm, 0.3 µm, 0.2 µm, 0.1 µm, 0.09 µm, or 0.08 µm or so. The standard deviation of the thickness of the lower layer of the spacer layer may be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The shape of the spacer structure in the spacer layer is not particularly limited. For example, the spacer structure itself may have the shape of a general column spacer or partition wall-type spacer. That is, when the spacer layer does not consider the lower layer, the shape of the spacer structure may have the same shape as a conventional column spacer or partition wall-type spacer.

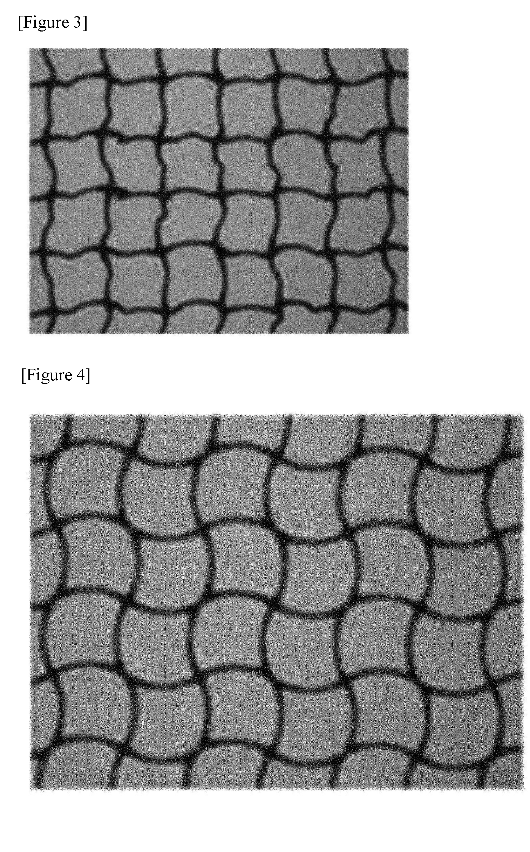

In one example, the spacer structure may be a partition wall-type spacer structure. As is known, in the case of the partition wall-type spacer structure, when the spacer layer has been observed from its surface, the partition wall-type spacer structure may be in the form of a line-type spacer. In one example, when the spacer layer has been observed from its surface, the partition wall-type spacer structure may be a structure comprising a plurality of line-type spacers intersecting each other to form a net shape. By the intersection of such a plurality of line-type spacers, the partition wall-type spacer structure may form one or more closed figures. These closed figures may also be formed in one, or a plurality of two or more. In this instance, the line-type spacers intersecting each other to form the closed figure or the net shape may be the non-linear line-type spacers as described above, and may also be line-type spacers of a different shape from the foregoing. Spacer patterns of this shape are exemplified in Figures 3 to 7. Among these, the shape of the spacer patterns shown in Figures 3 to 6 is patterns of an irregular shape different from a pattern of a traditional partition wall-type spacer, for example, a honeycomb pattern in which regular hexagons are repeated, or the like. Such patterns are shapes capable of minimizing optical defects caused by light diffraction phenomena, and the like, depending on regularity of the partition wall-type spacer.

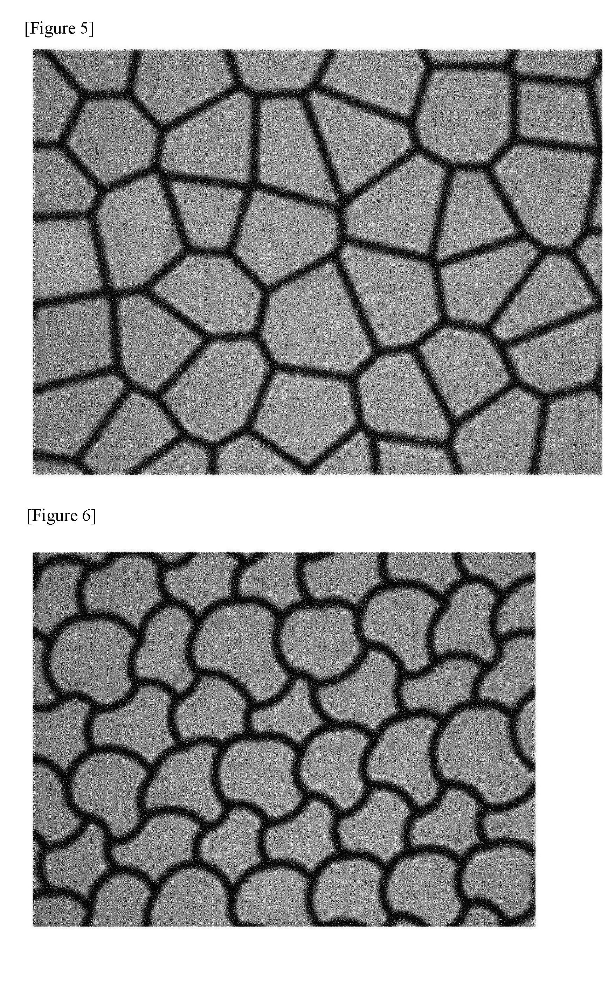

The patterns of this type may include patterns (e.g., patterns shown in Figures 4 and 6) in which the line-shape spacers are in a curved shape at least at some intersections among the intersections of the plurality of line-type spacers, patterns (e.g., patterns shown in Figures 3, 4, and 6, etc.) in which the length of the line-type spacers connecting at least some adjacent intersections among the intersections of the plurality of line-type spacers is longer than the length of the straight lines connecting the adjacent intersections, and patterns (e.g., patterns illustrated in Figures 4 and 6) in which the line-type spacers connecting some adjacent intersections among the intersections forming the closed figures existing in the net shape include curved shapes. Methods of designing and implementing patterns of this type are disclosed in, for example, WO2023/106826A1 or WO2023-106825A1, and the like.

The size of the spacer structure may be controlled together with the height of the spacer structure. Such a spacer size may be adjusted in consideration of the degree of transmittance variation in a transmittance-variable device. Here, when the spacer structure is in the form of a column spacer to be described below, the spacer structure size means the width of the upper portion of the relevant column spacer. In addition, when the spacer structure is in the form of a partition wall-type spacer to be described below, the spacer structure size means the line width of the relevant partition wall-type spacer. When the spacer structure size is not constant, an average size may be applied.

For example, the lower limit of the ratio S/H1 of the spacer size (S) (e.g., the width of the upper portion of the column-type spacer structure or the line width of the partition wall-type spacer structure) to the spacer structure height (H1) may be 0.1, 0.3, 0.5, 0.7, 0.9, 1.1, 1.3, 1.5, 1.7, 1.9, or 2.0 or so, and the upper limit thereof may be 10, 9, 8, 7, 6, 5, 4, 3, or 2 or so. The ratio may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

For example, the lower limit of the spacer size (S) (e.g., the width of the upper portion of the column-type spacer structure or the line width of the partition wall-type spacer structure) may be 10 µm, 12 µm, 14 µm, 16 µm, 18 µm, 20 µm, 22 µm, 24 µm, 26 µm, 28 µm, or 30 µm or so, and the upper limit thereof may be 200 µm, 180 µm, 160 µm, 140 µm, 120 µm, 100 µm, 80 µm, 60 µm, 40 µm, or 30 µm or so. The spacer structure size may be within a range of more than or equal to, or more than any lower limit arbitrarily selected from the above-listed lower limits; within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The area occupied by the spacer structure in the spacer layer may be adjusted. For example, the lower limit of the ratio of the area occupied by the spacer structure based on the total area of the base material layer may be 0.5%, 2.5%, 4.5%, 6.5%, 8.5%, 10.5%, 12.5%, 14.5%, 16.5%, 18.5%, 19.5%, or 20% or so, and the upper limit thereof may be 30%, 29%, 28%, 27%, 26%, 25%, 24%, 23%, 22%, 21%, or 20% or so. The ratio may be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

Under such a ratio, it is possible to achieve the desired effect more effectively while the spacer structure appropriately maintains the interval between the substrates.

The spacer layer may have an optical density in an appropriate level. For example, the lower limit of the optical density of the spacer layer may be 0, 0.85, 0.9, 0.95, 1.0, 1.1, 1.2, 1.3, 1.4, or 1.5 or so, and the upper limit thereof may be 5, 4.5, 4, 3.5, 3, 2.5, 2.4, 2.3, 2.2, 2.1, 2.0, 1.9, 1.8, 1.7, 1.65, 1.6, 1.55, or 1.5 or so. The optical density may be within a range of more than or equal to, or more than any lower limit arbitrarily selected from the above-listed lower limits; or within a range of less than, or equal to or less than any upper limit arbitrarily selected from the above-listed upper limits while being more than or equal to, or more than any lower limit arbitrarily selected from the above-listed lower limits.

The optical density is an optical density determined when the spacer layer has been formed in the form of a layer with a uniform thickness without any step, i.e., without the lower layer and the spacer structure, to have a thickness of 15 µm, and the measurement method is summarized in the item of Test Example 1. By forming the spacer layer of a material having such an optical density, a device capable of varying transmittance can be implemented while ensuring the desired low transmittance and low haze in a blocking mode, and even when the spacer layer is formed to have a color, it is possible to prevent recognition of defects due to color differences.

The spacer layer may exhibit an appropriate level of haze. For example, the lower limit of the haze of the spacer layer may be 5%, 10%, 15%, 20%, 25%, 30%, 35%, 40%, 45%, 50%, 55%, or 60% or so, and the upper limit thereof may be 65%, 64%, 63%, or 62% or so. The haze can be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The haze is also haze determined when the spacer layer has been formed in the form of a layer with a uniform thickness without any step, i.e., without the lower layer and the spacer structure, to have a thickness of 15 µm, and the measurement method is summarized in the item of Test Example 1. By forming the spacer layer of a material having such haze, a device capable of varying transmittance can be implemented while ensuring the desired low transmittance and low haze in a blocking mode, and even when the spacer layer is formed to have a color, it is possible to prevent recognition of defects due to color differences.

The spacer may be formed using known materials, such as those used to form typical column spacers or partition wall-type spacers. Typically, column spacers or partition wall-type spacers are manufactured through an exposure process or the like using a binder which is curable by ultraviolet rays or the like. Therefore, the spacer layer may comprise a resin component, such as a cured product of the binder. The spacer layer may also be manufactured through a typical patterning process using the binder, such as an imprinting process. Therefore, the spacer layer may comprise a binder. In this instance, a binder used to form typical column spacers or partition wall-type spacers may be used.

The specific type of the binder is not particularly limited, and for example, acrylate-based polymeric, oligomeric, or monomeric materials, or epoxy-based polymeric, oligomeric, or monomeric materials, and the like may be used, but is not limited thereto.

For accomplishment of the above-described optical density, the spacer layer may comprise a coloring component. Such a coloring component may be included in the spacer layer together with the resin component. An example of the coloring component is not particularly limited, and any appropriate type may be selected depending on the intended purpose. For example, the coloring component may comprise a component capable of producing a black color, such as a dye or a pigment, and the like.

Such a dye or pigment may be exemplified by one, or two or more selected from metal oxides, metal nitrides, metal oxynitrides, carbon black, graphite, azo-based pigments, phthalocyanine pigments, or carbon-based materials, and the like, but is not limited thereto. As applicable pigments or dyes, the metal oxides may be exemplified by chromium oxide (CrxOy, etc.) or copper oxide (CuxOy, etc.), and the like, and the metal oxynitrides may be exemplified by aluminum oxynitride (AlxOyNz, etc.), and the like, without being limited thereto. Furthermore, the carbon-based material may be exemplified by porous carbons, such as carbon nanotubes (CNTs), graphene, and activated carbon, and the like, but is not limited thereto.

For example, the spacer layer may be formed by formulating the pigment or dye with the above-described binder and then curing it, or by applying the material itself through deposition or plating in an appropriate manner.

The amount of the coloring component, such as the dye or pigment, in the spacer layer is not particularly limited, which may be selected within a range that the above-described optical density is achievable. For example, the lower limit of the ratio of the coloring component included in the spacer layer may be 1 wt%, 1.5 wt%, 2 wt%, 2.5 wt%, 3 wt%, or 3.5 wt% or so, and the upper limit thereof may be 8 wt%, 7 wt%, 6 wt%, 5 wt%, or 4 wt% or so. The ratio may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The type of the coloring component, such as the dye or pigment, is not limited to the foregoing, and an appropriate type may be selected depending on desired darkening (optical density), and the like, and the ratio may also be selected in consideration of the darkening, and the like.

In one example, the spacer layer may include a ball spacer. For example, the spacer layer may comprise the resin component and the ball spacer. In another example, the spacer layer may comprise the resin component, the coloring component, and the ball spacer. Such a ball spacer may be embedded within the spacer layer, or may be in contact with the spacer layer, or attached thereto. For example, the ball spacer may be partially or completely embedded within the spacer layer (resin component) or in contact with the spacer layer (binder).

For example, the matter that the ball spacer is completely embedded may mean a form that the ball spacer is entirely inserted into the spacer layer, and the matter that it is partially embedded may mean that a portion of the ball spacer is inserted into the spacer layer and a portion has a form exposed to the outside. In addition, the matter that the ball spacer may be included in a contacting form may mean that one surface of the spacer layer and one surface of the ball spacer are in contact with each other. The shape of the ball spacer is not particularly limited, which may be a circular ball shape commonly used in the industry, or other shapes.

The average particle diameter of the ball spacer is not particularly limited, which may be selected within a range capable of achieving an optical density to be described below. For example, the lower limit of the average particle diameter of the ball spacer included in the spacer layer may be 0.6 µm, 0.8 µm, 1.0 µm, 1.2 µm, 1.4 µm, 1.6 µm, 1.8 µm, 2.0 µm, 2.2 µm, 2.4 µm, 2.6 µm, 2.8 µm, 3.0 µm, 3.2 µm, 3.4 µm, 3.6 µm, or 3.8 µm or so, and the upper limit thereof may be 50 µm, 45 µm, 40 µm, 35 µm, 30 µm, 25 µm, 20 µm, 15 µm, 10 µm, 9 µm, 8 µm, 7 µm, 6 µm, 5 µm, or 4 µm or so. The average particle diameter of the ball spacer may be within a range of more than or equal to, or more than any lower limit arbitrarily selected from the above-listed lower limits; within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The lower limit of the standard deviation of the particle diameter of the ball spacer may be 0 µm, 0.05 µm, 0.1 µm, 0.15 µm, or 0.2 µm or so, and the upper limit thereof may be 5 µm, 4.5 µm, 4 µm, 3.5 µm, 3 µm, 2.5 µm, 2 µm, 1.5 µm, 1 µm, 0.5 µm, or 0.3 µm or so. The standard deviation may be within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The upper limit of the CV (Coefficient of Variation) value (=100 x standard deviation of particle diameter of ball spacer/average particle diameter of ball spacer) of the particle diameter of the ball spacer included in the spacer layer may be 10%, 9%, 8%, 7%, or 6% or so, and the lower limit thereof may be 0%, 1%, 2%, 3%, 4%, or 5% or so. The CV (Coefficient of Variation) value may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

By applying such a ball spacer, it is also possible to secure smaller standard deviations of the thickness of the lower layer and the height of the spacer structure.

As described above, the amount of ball spacer included in the spacer layer is not particularly limited, which may be selected within a range that the desired optical density, height uniformity, and thickness uniformity, and the like can be achieved. For example, the lower limit of the parts by weight of the ball spacer included in the spacer layer may be 0.1 parts by weight, 0.2 parts by weight, 0.3 parts by weight, 0.4 parts by weight, 0.5 parts by weight, 0.6 parts by weight, 0.7 parts by weight, 0.8 parts by weight, 0.9 parts by weight, 1.0 parts by weight, 1.1 parts by weight, 1.2 parts by weight, 1.3 parts by weight, 1.4 parts by weight, or 1.5 parts by weight or so, relative to 100 parts by weight of the above-described resin component, and the upper limit thereof may be 10 parts by weight, 9 parts by weight, 8 parts by weight, 7 parts by weight, 6 parts by weight, 5 parts by weight, 4 parts by weight, 3 parts by weight, 2 parts by weight, or 1.5 parts by weight or so. The weight ratio of the ball spacer may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The specific type of the ball spacer is not particularly limited. For example, for accomplishment of the optical density, and the like, a colored ball spacer, such as a black ball spacer, may be used as the ball spacer.

The substrate may comprise, in addition to the base material layer and the spacer layer, other elements required for optical devices such as a transmittance-variable device. Such elements are variously known, which representatively include an electrode layer, and the like. In one example, the substrate may further comprise the electrode layer between the base material layer and the spacer layer. As the electrode layer, a known material may be applied. For example, the electrode layer may comprise a metal alloy, an electrically conductive compound, or a mixture of two or more of the foregoing. Such a material may be exemplified by metals such as gold; oxide materials such as CuI, ITO (Indium Tin Oxide), IZO (Indium Zinc Oxide), ZTO (Zinc Tin Oxide), aluminum or indium-doped zinc oxide, magnesium indium oxide, nickel tungsten oxide, ZnO, SnO₂, or In₂O₃; metal nitrides such as gallium nitride; metal selenides such as zinc selenide; and metal sulfides such as zinc sulfide, and the like. A transparent hole-injecting electrode layer may also be formed using a laminate of a metal thin film such as Au, Ag, or Cu and a transparent material with a high refractive index such as ZnS, TiO2, or ITO, and the like.

The electrode layer may be formed by any means such as vapor deposition, sputtering, chemical vapor deposition, or electrochemical means. The electrode layer may also be patterned by a known method without any special limitation, and for example, it can be patterned through known photolithography, or a process using a shadow mask, or the like.

The substrate may further comprise an alignment film present on the top of the spacer layer.

The type of the alignment film is not particularly limited, and any known alignment film, such as a rubbing alignment film or a photo-alignment film, may be used. A method of forming the alignment film and performing orientation treatment thereon also follows a known method.

In one example, the substrate may comprise a protective film as an additional component. For example, the substrate may further comprise a protective pressure-sensitive adhesive film attached to the surface, on which the spacer layer is formed, on the base material layer. In such a constitution, as the pressure-sensitive adhesive film, any known protective pressure-sensitive adhesive film may be used without special limitation.

The present specification also discloses a method for manufacturing a spacer layer. Such a manufacturing method may be a method for manufacturing a spacer layer included in the substrate. However, the method for manufacturing a spacer layer is not limited to a manufacturing method to be described below, and other methods are also applicable if they are methods capable of satisfying conditions such as the height of the spacer structure and the relationship between the spacer structure and the lower layer.

For example, the spacer layer may be formed using a method known as an imprinting process.

For example, in the manufacturing method, it may be formed, in a state where a layer of a curable composition formed on a base material layer is pressurized with an imprinting mask, by curing the layer. The curable composition is a material for forming the spacer layer, which may, for example, comprise the above-described binder, and may comprise, as additional components, the coloring component and/or the ball spacer, and the like.

The imprinting mask may comprise an incised portion, where the incised portion may have a shape corresponding to the shape of the spacer structure as described above.

For example, it is possible to achieve the height and width, and the like of the spacer structure as described above by controlling the depth, standard deviation, and width, and the like of the incised portion in the imprinting mask, and it is also possible to adjust the thickness of the lower layer by controlling the degree of pressurization applied by the imprinting mask.

The present specification also discloses an optical device comprising the substrate.

For example, the optical device may comprise a first substrate and a second substrate disposed opposite the first substrate, and may comprise a transmittance-variable layer present in an interval between the first and second substrates. Here, one of the first and second substrates may be the above-described substrate, and the interval between the substrates may be maintained by the spacer structure.

The optical device may be formed by applying known constitutions as other constitutions, except for using the substrate disclosed herein.

For example, the transmittance-variable layer may be a liquid crystal layer. Liquid crystal layers capable of functioning as the transmittance-variable layer are well known. For example, the liquid crystal layer may also be a liquid crystal layer used in a typical liquid crystal display, and may be a so-called guest host liquid crystal layer, a polymer dispersed liquid crystal layer, or a pixel-isolated liquid crystal layer, and the like. Furthermore, transmittance-variable layers such as those used in suspended particle devices or electrochromic devices may also be used.

In one example, a transmittance-variable layer for the substrate to be appropriately usable may comprise a coloring component. For example, the transmittance-variable layer may comprise at least a liquid crystal compound and a coloring component. An example of the coloring component is not particularly limited, but may be a component that produces a black color.

A representative example of a transmittance-variable layer comprising a coloring component is a so-called guest host liquid crystal layer, but is not limited thereto. In this case, the coloring component may be a dichroic dye.

### Advantageous Effects

The present specification discloses a substrate and a use thereof. For example, even when the substrate is applied to a device for implementing transmittance variation by means of a liquid crystal host and a dichroic dye guest, it is possible to ensure low transmittance relative to a thickness in a blocking mode, and it is also possible to prevent the occurrence of haze in the blocking mode. Even when a spacer is implemented to be colored, the substrate can prevent an optical defect recognized by the color of the spacer in a transparent mode and the like. For example, the substrate can be used in a device having a transmittance-variable layer comprising a dye.

### Description of Drawings

Figure 1 is an exemplary structure of a conventional transmittance-variable device.
Figure 2 is an exemplary structure of a substrate disclosed in the present specification.
Figures 3 to 6 are drawings showing shapes of spacer structures.
Figures 7 and 8 are drawings for explaining a design method of a spacer structure applied in an example.
Figure 9 is an exemplary cross-sectional diagram of an imprinting mask for forming a spacer layer in an example.
Figure 10 is a diagram for explaining a shape of a spacer layer in a comparative example.
Figure 11 is an exemplary cross-sectional diagram of an imprinting mask for forming a spacer layer in a comparative example.
Figure 12 is a diagram for explaining a method of analyzing a diffraction pattern of a substrate.
Figures 13 and 14 are drawings for explaining results of a diffraction pattern analysis of a substrate.

### Mode for Invention

Hereinafter, substrates and the like disclosed in this specification are described in detail through examples, but the scope of the substrates and the like is not limited by the following examples.

### Example 1

### Spacer Pattern Design

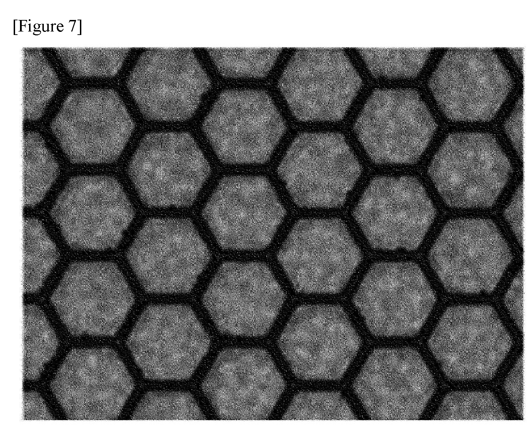

A net pattern of a spacer in Figure 6 was designed in the following manner. A net pattern of a spacer in Figure 7 was formed as an initial arrangement. The shape is a partition wall spacer pattern of a so-called honeycomb pattern, in which closed hexagonal shaped-figures are regularly disposed. One side of the hexagon had a length of about 350 µm or so.

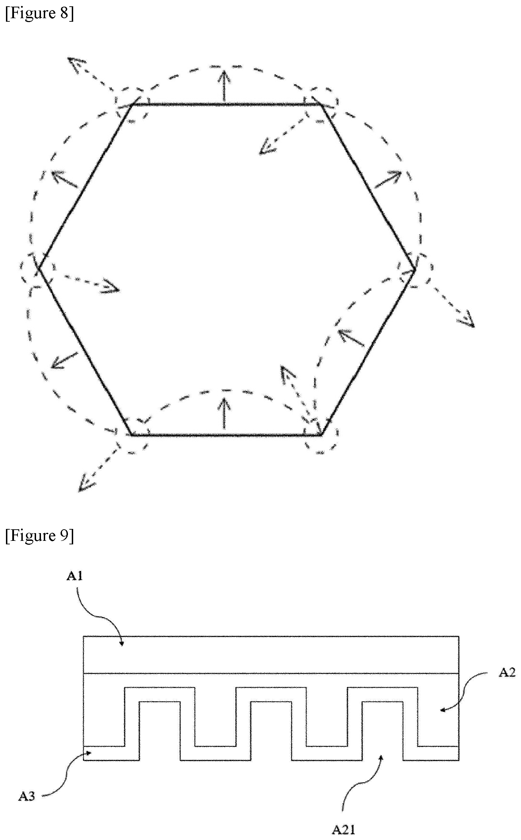

As in Figure 8, the vertices of the regular hexagon were moved as illustrated by the dotted arrows in Figure 8, and the sides of the regular hexagon were curved as illustrated by the solid arrows in Figure 8.

The movement of the vertices was performed with an irregularity degree of 70%. Specifically, six circular regions centered around each vertex of the regular hexagon were set. Each circular region was formed to have a radius, the length (0.35P) of which was 70% of the length (0.5P) of 0.5 times the side length (P = 350 µm) of the regular hexagon. Thereafter, the vertices of the respective circular regions were arbitrarily moved to any points within the circular regions.

Curved line formation of the sides of the regular hexagon was performed to impart a curvature in an irregularity degree of about 80% or so. This irregularity degree was imparted using a random coordinate generation program (CAD). Upon curvature impartation, directions where the respective sides of the regular hexagon were bent were set to be arbitrarily selected.

The number of closed figures present in the net shape of the spacer pattern formed using the above method was about 10,000. When 100 of the closed figures were selected to calculate their areas, the average value of the area was about 0.306 mm² or so. The 100 closed figures were selected to form a rectangular shape with 10 closed figures horizontally and 10 closed figures vertically.

### Curable Composition Preparation

An ultraviolet curing binder (A) for a partition wall spacer (including an ultraviolet curing acrylate compound (Sigma-Aldrich), a polymerization initiator, and a dispersant) and a black dye (B) (carbon black (Tokushiki, BK-4735)) were mixed in a weight ratio (A: B) of approximately 96.5:3.5 to prepare a curable composition.

### Substrate Manufacturing

The imprinting mask of Figure 9 was prepared. The mask is a mask that a mold layer (A2) in which an incised portion (A21) is formed is present on an ultraviolet-transparent PET (poly(ethylene terephthalate)) film (A1), and a release layer (A3) is formed on the surface of the mold layer (A2). The incised portion (A21) has the same shape as the designed spacer pattern when viewed from the surface. The incised portion has a width of about 30 µm or so. The depth of the incised portion had an average value of about 15 µm or so and a standard deviation of about 0.1 µm or so.

A substrate with the shape shown in Figure 2 was manufactured using the mask. First, in a uniaxially stretched PET (poly(ethylene terephthalate)) film (SKC, V7610) (100) having an amorphous ITO (Indium Tin Oxide) electrode layer (300) formed on the surface, the curable composition was dropped in an amount of about 2 to 3 mL or so onto the electrode layer (300), thereby manufacturing a laminate sequentially comprising the PET film (100), the electrode layer (300), and the layer of the curable composition. Subsequently, in a state where the imprinting mask was pressed against the layer of the curable composition of the laminate and subjected to crimping, ultraviolet rays were irradiated to cure the layer of the curable composition (ultraviolet ray irradiance level: about 1,000 mJ/cm²), thereby forming a spacer layer (200) comprising a lower layer (202) and a spacer structure (201).

The thickness (H2) of the lower layer (202) in the spacer layer (200) was about 1 µm or so. The height (H1) of the spacer structure (201) in the spacer layer (200) was about 15 µm or so on average, and the standard deviation was about 0.1 µm or so. The line width of the spacer structure (201) was about 30 µm or so. The thickness (H2) of the lower layer (202) was adjusted by controlling the degree of crimping using the mask during the formation process of the spacer layer (200). The thickness of the lower layer and the height of the spacer structure, and the like were confirmed using an optical profiler (Zygo, NEWVIEW8300), and the line width was confirmed using an optical microscope (Olympus BX 51).

Since the spacer layer (200) was formed on the entire surface of the base material layer (100), the formation area ratio of the spacer layer was about 100% or so. When the lower layer (202) of the spacer layer (200) was not considered, the spacer structure (201) occupied an area of about 20% in the total area of the base material layer (100).

### Example 2

### Curable Composition Preparation

A curable composition (B) was prepared by further formulating a black ball spacer into the curable composition (A) prepared in Example 1. The black ball spacer was formulated at a ratio of about 2.5 parts by weight relative to 100 parts by weight of the ultraviolet curing binder in the curable composition (A). As the black ball spacer, the black ball spacer (Sekisui Chemical, KBN 50395) with an average particle diameter of 3.95 µm or so, a CV (coefficient of variation) of 5.8% or so, and a standard deviation of approximately 0.23 µm or so was used.

### Substrate Manufacturing

A substrate was manufactured in the same manner as in Example 1, except for using the curable composition (B). The thickness (H2) of the lower layer (202) in the formed spacer layer (200), the height (H1), and standard deviation and the line width of the spacer structure (201), the formation area ratio of the spacer layer, and the occupied area of the spacer structure (201) were approximately the same as in Example 1. In addition, the standard deviation of the thickness of the lower layer (202) was about 0.08 µm or so.

### Comparative Example 1.

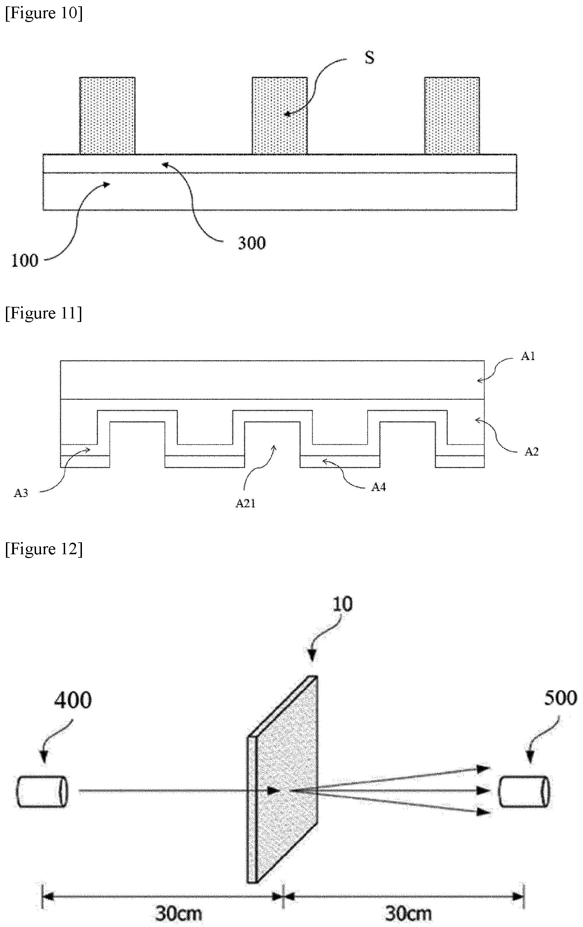

A substrate was formed in the same manner as in Example 1. The difference from Example 1 was that by using the mask of Figure 11 as the imprinting mask and performing a development process to be described below, a substrate with the same shape as in Figure 10 is manufactured. The mask of Figure 11 is obtained by further forming an ultraviolet shielding layer (A4) on a release layer (A3) formed on the convex portion of the mold layer (A2) among the release layer (A3) of the mask of Figure 9.

In a state where the mask was subjected to crimping onto the layer of the curable composition of the laminate formed in the same manner as in Example 1, ultraviolet rays were irradiated under the same conditions as in Example 1. Thereafter, a development process of removing the uncured curable composition in which ultraviolet rays were not irradiated due to the ultraviolet shielding layer was performed. As a result, a substrate having an electrode layer (300) present on a base material layer (100) and having a spacer structure (S) on its surface was obtained, as shown in Figure 10.

The height of the spacer structure (S) was about 16 µm or so on average, and the standard deviation was about 0.1 µm or so. The line width of the spacer structure (S) was about 30 µm or so. The spacer structure (S) occupied an area of about 20% in the total area of the base material layer (100).

### Comparative Example 2

### Curable Composition Preparation

A curable composition (B) was prepared by further formulating a black ball spacer into the curable composition (A) prepared in Example 1. The black ball spacer was formulated at a ratio of about 2.5 parts by weight relative to 100 parts by weight of the ultraviolet curing binder in the curable composition (A). As the black ball spacer, the black ball spacer (Sekisui Chemical, KBN 5115) with an average particle diameter of 15 µm or so, a CV (coefficient of variation) of 1.3% or so, and a standard deviation of approximately 0.2 µm or so was used.

### Substrate Manufacturing

A substrate with the same shape as in Figure 10 was manufactured in the same manner as in Comparative Example 1 using the curable composition. The height, line width, and occupied area ratio of the spacer structure (S) of the substrate were approximately the same as those in Comparative Example 1.

### Test Example 1. Transmittance, Haze, and Optical Density

The optical properties of the curable compositions used in Examples 1 and 2, and Comparative Example 2 were evaluated using the following method. A base material layer was prepared, in which a transparent ITO (indium tin oxide) electrode layer with a thickness of about 23 nm or so was formed on one surface of a PET (poly(ethylene terephthalate)) film with a thickness of about 125 µm or so. A curable composition was applied onto the ITO electrode layer of the base material layer and cured by irradiating it with ultraviolet rays to form a layer having a thickness of about 15 µm or so. The ultraviolet irradiation conditions were the same as in Example 1. Subsequently, the transmittance, haze, and optical density of the cured layer of the curable composition were measured. The transmittance and haze were measured for light of about 550 nm using equipment (Murakami, HM-150N), and the optical density was also obtained by substituting the transmittance (unit: %) T measured by the equipment into the equation (Optical Density = -log(T/100)). The transmittance, optical density, and haze were evaluated by irradiating the surface of the cured layer of the curable composition with light in a normal direction to the surface. As the result of the measurement, the transmittance of the layer was about 3.1%, the optical density was about 1.51, and the haze was about 61.3% (same for the curable compositions of Examples 1 and 2 and Comparative Example 2).

### Test Example 2. Transmittance Variation and Black Display Efficiency Evaluation

A transmittance-variable device (optical device) was manufactured using the following method.

A vertical alignment film was formed on the spacer layer of the substrate of each example, and a vertical alignment film was formed on the spacer structure and electrode layer of each comparative example. The vertical alignment film was formed in the same manner to a thickness of about 300 nm or so. The vertical alignment film was formed by bar-coating a material (Nissan, 5661LB3), maintaining the film at 100°C for 10 minutes or so, and then rubbing in one direction. The substrate thus manufactured was used as a first substrate.

In a uniaxially stretched PET (poly(ethylene terephthalate)) film having an ITO (Indium Tin Oxide) electrode layer with a thickness of about 23 nm or so formed on the surface, a second substrate was manufactured by forming a silicone pressure-sensitive adhesive layer on the electrode layer. The silicone pressure-sensitive adhesive layer was formed to a thickness of 10 µm by bar-coating a pressure-sensitive adhesive composition (ShinEtsu, KR3700) with a solid content concentration of about 25 wt% or so on a release layer of a release film (Nippa, FSC6), and maintaining the film at about 150°C or so for 5 minutes. Subsequently, the silicone pressure-sensitive adhesive layer thus formed was attached to the electrode layer of the PET (poly(ethylene terephthalate)) film, thereby manufacturing a second substrate.

A liquid crystal composition was coated on the surface of the alignment film of the first substrate. As the liquid crystal composition, a composition comprising a liquid crystal host (Merck, MAT-18-1261) (average refractive index: 1.51, refractive index anisotropy: 0.07), a chiral dopant (Merck, S811), and an anisotropic black dye guest was used. The chiral dopant content was adjusted so that the liquid crystal pitch was about 20 µm or so.

The release film (Nippa, FSC6) was peeled from the second substrate to expose the silicone pressure-sensitive adhesive layer, and the exposed pressure-sensitive adhesive layer was laminated to be in contact with the alignment film of the first substrate, thereby forming a transmittance-variable device. The device is a device that when any external voltage is not applied, the liquid crystal host is oriented vertically to implement a transparent mode, and if the external voltage is applied, the liquid crystal host is oriented horizontally while being twisted to implement a blocking mode. A voltage (40V) was applied to such a device to implement the blocking mode, and the transmittance and haze in the blocking mode were evaluated, and described in Table 1 below. Upon evaluation, HM-150N equipment (Murakami) was used.

**[Table 1]**

| | Example | | Comparative Example | |
|---|---|---|---|---|
| | 1 | 2 | 1 | 2 |
| Blocking mode transmittance (%) | 1.3 | 1.2 | 1.8 | 2.0 |
| Blocking mode haze (%) | 9.0 | 8.5 | 12.4 | 14 |

As shown in Table 1, when the substrates of the examples were applied, lower transmittance and haze could be secured in the blocking mode. In the transmittance-variable devices applied by the substrates of Examples 1 and 2, the transmittance upon no voltage application (transparent mode) was about 8.2% to 9% or so, and the haze was about 9% to 9.1% or so. Such a result means that when the substrates of the examples have been applied, it is possible to implement the lower transmittance in the blocking mode, and there is an effect capable of varying the transmittance.

### Test Example 3. Substrate Diffraction Pattern Analysis (Transmitted Light Analysis of LED Light)

The diffraction pattern of the substrate (PET film/ITO electrode layer/spacer layer) of Example 1 was analyzed. The diffraction pattern analysis was performed by cutting the substrate so that the width and length were each 100 mm or so.

The process of performing the analysis is schematically illustrated in Figure 12.

As shown in Figure 12, a circular LED light source (400) and a camera (500) capable of receiving light from the light source were disposed at an interval of about 60 cm. The substrate (10) was then disposed between the light source (400) and the camera (500). As shown in Figure 12, the substrate (10) was disposed at an interval of 30 cm from each of the light source (400) and the camera (500).

The light source (400) was disposed to irradiate the center (gravity center) of the substrate (10) with light, and the camera (500) was disposed at a position where light to be irradiated from the light source (400) could be directly incident thereon when the substrate (10) was absent. Furthermore, the substrate (10) was disposed so that the surface on which the spacer layer was formed faced the direction of the light source (400).

The light source (400) was an LED (Light Emitting Diode) light source (400) that light with a wavelength of about 550 nm or so was irradiated, which was in a circular shape with a diameter of about 3 mm or so. A Nikon's product (COOLPIX S8200) was used as the camera (500).

In this state, light was irradiated from the light source (400) toward the substrate (10), and an image obtained by light passing through the substrate (10) was recorded on the camera (500). At this time, the shooting mode of the camera (500) was set to a landscape mode.

The recorded image (analysis target image) was converted to a black-and-white image using the Image J program (Image J bundled with 64-bit Java 1.8.0_172).

To analyze the received light, the Threshold function of the Image J program was used. In the absence of the substrate, light was irradiated by the LED light source (400) of Figure 12, and the image received by the camera (500) was converted to a black-and-white image, where the white image was used as the reference image. Upon changing the reference image, the automatically designated threshold value using the Image J program's Threshold function was also input in the same manner even when analyzing other images.

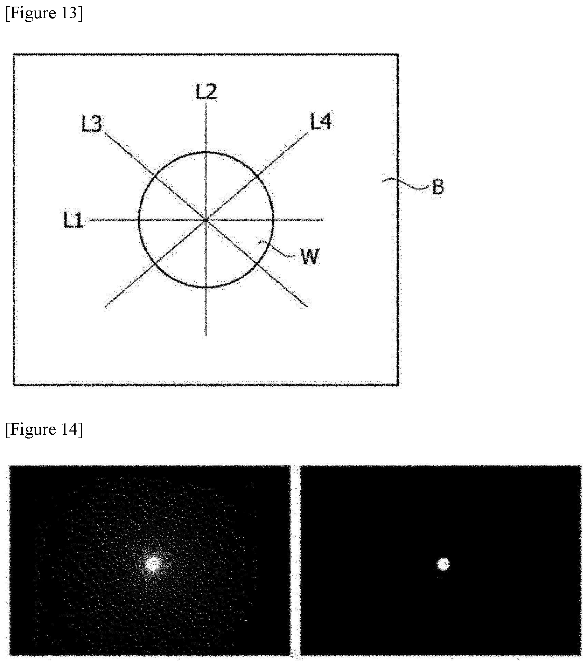

As shown in Figure 13, for the obtained image (image in which the analysis target image was converted to a black-and-white image), a horizontal line (L1) and a vertical line (L2), and two diagonal lines (L3 and L4) in the directions bisecting the angle (90 degrees) formed by the horizontal line (L1) and the vertical line (L2) were designated, and the length of the pixel of the white image along each line was obtained, and also the area of the white image was obtained.

Figure 13 schematically represents the black-and-white image, wherein the portion indicated by B in Figure 13 is a black region of the black-and-white image, and the portion indicated by W is a white region (white image).

The pixel length of the white image is the number of pixels in the portion where the white image exists, which is dimensionless. That is, here, the pixel lengths of the horizontal line (L1), vertical line (L2), and diagonal lines (L3, L4) are each the number of pixels in the regions occupied by the horizontal line (L1), vertical line (L2), and diagonal lines (L3, L4).

The length of the horizontal line (L1) is the length of the line passing through the center of the white image in the vertical direction of the black-and-white image, and the length of the vertical line (L2) is the length of the line passing through the center of the white image in the horizontal direction of the black-and-white image. The point (center point) where the horizontal line (L1) and the vertical line (L2) intersect has been set at a position where the four regions of the white image divided by the horizontal line (L1) and the vertical line (L2) can have substantially the same area. In addition, the left and right diagonal lines (L3, L4) form a 45-degree angle with respect to the vertical line (L2) and the horizontal line (L1), respectively, while passing through the center point of the white image. That is, the directions of the horizontal line (L1), the vertical line (L2), and the diagonal lines (L3, L4) form a 45-degree angle with respect to each other.

It means that the smaller the deviation between the area of the white image in the black-and-white image of the analysis target image obtained in the above manner and the area of the white image in the reference image, the less the diffraction phenomenon.

As described above, the reference image is a white image obtained by converting the image, in which light is irradiated by the LED light source (400) in the absence of the substrate (10) to be received by the camera (500), into a black-and-white image, so that the area of the image is the area (A2) of the white image of the black-and-white image of the LED light in this specification.

When the area (A2) of the white image, which is the reference image, is considered 100%, the area (A1) (area ratio (unit: %) compared to the light source area) of the white image in the analysis target image, i.e., the black-and-white image obtained by transmitting LED light through the substrate can be confirmed, and the ratio (A1/A2) can also be confirmed.

For the white image in the black-and-white image of the analysis target image obtained in the above manner, when the standard deviation of the lengths of the four lines (L1 to L4) obtained is 50 or less, it can be evaluated that the diffraction phenomenon is minimal.

The analysis results for Example 1 confirmed in the above manner are as shown in Table 2 below, and the results are as shown in Figure 14.

**[Table 2]**

| | | Example 1 |
|---|---|---|
| Area ratio relative to light source area (%) | | 117 (A1/A2=1.17) |
| Pixel length (=number of pixels) | Horizontal line L1 | 263 |
| | Vertical line L2 | 257 |
| | Diagonal line L3 | 258 |
| | Diagonal line L4 | 260 |
| | Standard deviation | 2.6 |

In the case of Example 2, the same results as in Example 1 were shown.

## Claims

1. A substrate comprising a base material layer; and a spacer layer formed on the base material layer,
wherein the spacer layer comprises a lower layer covering 70% or more of the area of the base material layer and a spacer structure formed on the lower layer.

2. The substrate according to claim 1, wherein the spacer structure is present, based on a total area of the base material layer, on an area of 30% or less in the total area.

3. The substrate according to claim 1, wherein the spacer structure is formed integrally with the lower layer.

4. The substrate according to claim 1, wherein the spacer layer has an optical density in a range of 0.85 to 4.

5. The substrate according to claim 1, wherein the spacer layer has a haze of 65% or less.

6. The substrate according to claim 1, wherein the spacer layer comprises a coloring component.

7. The substrate according to claim 1, further comprising a ball spacer embedded in or attached to the spacer layer.

8. The substrate according to claim 1, wherein a ratio H1/H2 of a height H1 of the spacer structure to a thickness H2 of the lower layer is in a range of 1 to 30.

9. The substrate according to claim 1, wherein the lower layer has a thickness of 5 µm or less.

10. The substrate according to claim 1, wherein the spacer structure has a height in a range of 1 µm to 30 µm.

11. The substrate according to claim 10, wherein a standard deviation of the height of the spacer structure is in a range of 0.01 µm to 0.5 µm.

12. The substrate according to claim 1, wherein the spacer structure is a partition wall-type spacer structure comprising a plurality of line-type spacers intersecting each other to form a net shape.

13. The substrate according to claim 12, wherein the line-type spacers are in a curved shape at least at some intersections among intersections of the plurality of line-type spacers.

14. The substrate according to claim 12, wherein the length of the line-type spacers connecting at least some adjacent intersections among intersections of the plurality of line-type spacers is longer than the length of the straight line connecting the adjacent intersections.

15. The substrate according to claim 12, wherein the line-type spacers connecting some adjacent intersections among intersections forming closed figures present in the net shape comprise a curved shape.

16. The substrate according to claim 1, further comprising an electrode layer between the base material layer and the spacer layer.

17. An optical device comprising: a first substrate;
a second substrate disposed opposite the first substrate; and
a transmittance-variable layer present on an interval between the first and second substrates,
wherein the first substrate or the second substrate is the substrate of any one of claims 1 to 16,
and the interval is maintained by a spacer structure of the substrate.

18. The optical device according to claim 17, wherein the transmittance-variable layer comprises a coloring component.
